# EUROPEAN PATENT SPECIFICATION

(11) **EP 1 859 216 B1**
(45) Date of publication and mention of the grant of the patent: **18.11.2015**
(21) Application number: 06708372.5
(22) Date of filing: 20.02.2006
(51) Int. Cl.: F27D 17/00, F27B 3/18, F27D 3/00, C21C 5/56

(54) **CONNECTION CONVEYOR FOR LOADING A METAL CHARGE INTO A MELTING PLANT**
VERBINDUNGSFÖRDERER ZUM LADEN EINER METALLCHARGE IN EINE SCHMELZANLAGE
TRANSPORTEUR DE LIAISON DE CHARGEMENT DU METAL EN FONDERIE

(30) Priority: 22.02.2005 IT UD20050023
(43) Date of publication of application: 28.11.2007
(73) Proprietor: Danieli & C. Officine Meccaniche SpA, 33042 Buttrio (Udine) (IT)
(72) Inventor: SELLAN, Romano, I-34124 Trieste (IT); TERLICHER, Stefano, I-33043 Cividale Del Friuli (IT)
(74) Representative: Petraz, Gilberto Luigi
(86) International application number: PCT/EP2006/060084
(87) International publication number: WO 2006/089868

(56) References cited:
- US-A- 4 609 400

## Description

### FIELD OF THE INVENTION

The present invention concerns a connection conveyor used for loading a metal charge into a melting plant, particularly in an electric arc melting furnace, of the type that uses a loading system with a belt or channel, hereafter denominated main conveyor, and with the introduction of the charge from a side of the furnace.

The connection conveyor to which the invention refers is associated with translation means, such as for example with a trolley or arm, and functions as the last segment of the main conveyor and selectively connects said main conveyor with an aperture made in the wall of the furnace in order to discharge the scrap metal, or other type of charge, inside the furnace itself.

### BACKGROUND OF THE INVENTION

Plants are known for the transformation and melting of metal charges, which comprise an electric arc furnace suitable to collaborate with means to transport and possibly preheat the scrap. The electric furnace provides at least a container, or hearth, and a covering roof. The electrodes are positioned through suitable holes in the roof.

The conveyor means can be of the vibrating type to allow the feed of the charge, and cooperate with the electric furnace on one side and, on the other side, with a scrap loading system and with a possible system to remove the fumes. The conveyor means can be associated with hood means able to create a tunnel in which the fumes exiting from the furnace are made to pass, or in which burner means preheat the passing scrap.

The last segment of the conveyor means normally consists of a segment of autonomous conveyor, denominated connection conveyor, associated with translation means which allow it to move in the longitudinal direction of scrap feed. Examples of connection conveyors of this type are disclosed in US-5.800.591, in US 2001/0055739 A1 and in US 4,609,400 A1.

The translation means are disposed so as to move in the direction suitable to create the desired connection between the system that conveys the load and the inlet aperture into the electric furnace. With this displacement, the connection conveyor can be introduced inside the volume of the melting furnace, for example during the unloading of the scrap, or removed therefrom, for example when the scrap is not being unloaded. The movement of the connection conveyor can reach values of several meters.

When the connection conveyor, associated with the translation means, cooperates with the inside of the furnace, the vibration imparted thereto determines the feed and the subsequent fall of the scrap into the furnace. On the contrary, when the connection conveyor is completely outside the furnace, the vibration is stopped, so that the scrap possibly present therein does not advance. Normally, however, the position of the connection conveyor completely outside the furnace is assumed when there is no scrap on the trolley.

As disclosed in the above mentioned US 2001/0055739 A1, the connection conveyor normally has a cradle structure, associated with vibration means, the lateral and bottom walls of which cooperate with cooling systems. Normally the cradle structure is made by means of a plurality of metal sheets which form a sandwich structure inside which the circuits for the circulation of cooling fluid are provided.

Due to the very strong heat stresses deriving from the partial introduction into the volume of the furnace, together with the mechanical stresses caused by the vibrations, the structure of known connection conveyors is rapidly subject to wear, particularly with regard to the rapid formation of cracks and fissures in its lateral and bottom walls. This premature wear determines the need for frequent operations of maintenance and/or replacement of parts that require the cycle of feeding the charge to be interrupted, with consequent considerable loss of production of the melting plant.

Purpose of the invention is to achieve a connection conveyor which overcomes the shortcomings of the state of the art and guarantees a greater resistance and structural solidity over time, both with regard to heat stresses and also mechanical stresses.

The Applicant has devised, tested and embodied the present invention to overcome the shortcomings of the state of the art and to obtain other advantages as described hereafter.

### SUMMARY OF THE INVENTION

The present invention is set forth and characterized essentially in the main claim, while the dependent claims describe other innovative characteristics of the invention.

According to the invention, the connection conveyor has a structure consisting of a metal sheet, suitably bent to form a substantially U-shaped profile with lateral and bottom walls that define a cradle or channel to contain and transport the scrap.

On the outside of the cradle, to cover uniformly the entire outer surface of the bent metal sheet, a plurality of tubes for the cooling water are fixed, preferably by means of welding, forming cooling panels disposed one adjacent to the other, substantially flanking each other, so as to form a substantially continuous outer covering.

The cooling panels not only perform their own function of uniformly cooling the cradle structure, preventing the formation of points or zones subject to differentiated overheating, but also function as elements of structural stiffening.

To be more exact, in the preferential embodiment of the invention, each of said panels consists of a plurality of tubes, of the type without welds, connected to each other by means of suitable connection elements so as to form a plurality of substantially adjacent spirals. Each panel is suitable to be associated, at a first end, with means to feed the cooling fluid, and at a second end with means to discharge and possibly re-circulate said cooling fluid. Each cooling panel thus makes substantially a circuit of circulation for the cooling liquid which is independent from that of the other panels.

This solution reduces to a minimum the number of welds required to make the cooling panels and to fix them to the metal sheet, so that the points most subject to heat and mechanical stresses are reduced to a minimum.

According to the invention, the metal sheet has, distributed on its surface, a plurality of fissures or through eyelets. The fissures or through eyelets allow to fix, by means of welds or other suitable fixing means, the cooling panels onto the outside of the sheet by means of weld material which advantageously fills the entire volume of said fissures or eyelets.

In this way we obtain that the tubes can be disposed perfectly adherent to the outer surface of the sheet, without generating localized thicker zones which would create points of detachment and consequent thermal heads between the tube and the sheet. At the same time, possible traces of welding material which are deposited on the inner surface of the sheet can easily be removed by means of smoothing operations in order to guarantee that the inner surface does not have any ridges which could impede the correct movement of the metal charge.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral view of a connection conveyor according to the invention associated with a melting furnace;
- fig. 2 is a partial lateral section of the connection conveyor according to the invention;
- fig. 3 is a plane view of the development of the inner metal sheet that forms the connection conveyor according to the invention;
- fig. 4 shows the section from C to C of fig. 3;
- fig. 5 shows the detail E of fig. 2;
- fig. 6 shows the view from F of fig. 5.

### DETAILED DESCRIPTION OF A PREFERENTIAL FORM OF EMBODIMENT OF THE INVENTION

With reference to the attached drawings, the number 10 denotes generally a connection conveyor used for loading a metal charge into a melting furnace 11.

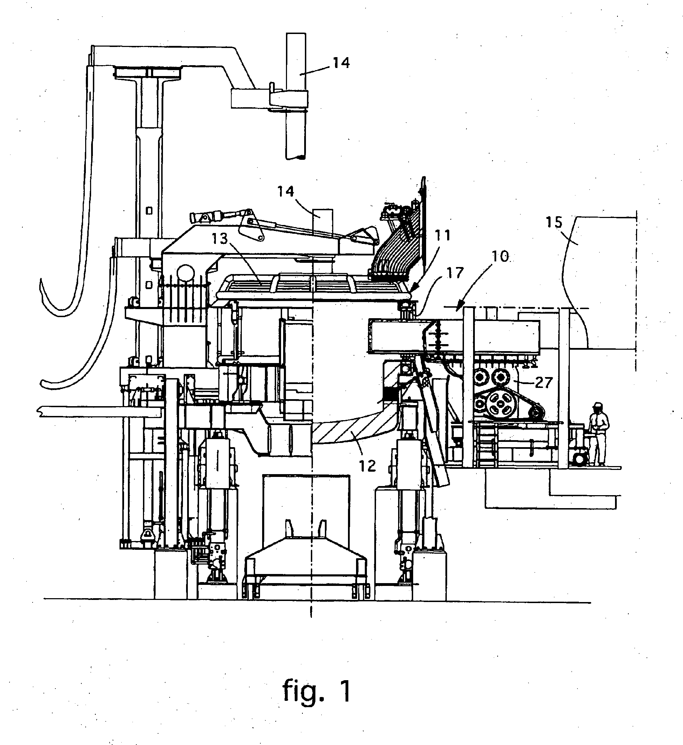

The connection conveyor 10 constitutes the terminal part of a main conveyor 15 (only the last segment of which is visible in fig. 1). The connection conveyor 10 can move backwards and forwards by some meters in order to be disposed in a first operating position, partly cooperating with the inside of the volume of the melting furnace 11 (fig. 1), in order to discharge the metal charge (not shown) inside it, and a second stand-by position, completely outside the furnace, assumed for example when the melting furnace 11 has to be inclined for a certain entity in order to carry out the tapping of the molten metal.

During the loading steps, the main conveyor 15, which is of the vibrating type, feeds the metal charge towards the furnace, continuously or intermittently according to the pre-selected loading modes, until it progressively disposes the metal charge on the base plane of the connection conveyor 10.

The connection conveyor 10 is also associated with vibration means, so that the metal charge can be discharged inside the furnace 11 when the connection conveyor 10 has at least its front end disposed inside it.

The melting furnace 11 comprises a hearth 12, normally made of refractory material, and a roof 13, through which the electrodes 14 are positioned. On the lateral wall of the hearth 12 an aperture 17 is made which serves for the at least partial introduction of the connection conveyor 10 inside the volume of the furnace 11.

The connection conveyor 10, in a known manner, has a cover, not shown here and possibly opening and/or removable, so that the fumes exiting from the melting furnace 11 can be channeled through the connection conveyor 10, and from it towards the main conveyor 15, in order to preheat the scrap before it is introduced inside the melting furnace 11.

The aperture 17 is equipped, in known manner, with sealing systems that at least partly close the gaps that are created between the aperture 17 and the overall bulk of the connection conveyor 10 and the cover.

The connection conveyor 10 substantially consists of a single metal sheet 23 bent back on itself so as to define a cradle structure, with a substantially U-shaped section, including lateral walls 24a and a bottom wall 24b.

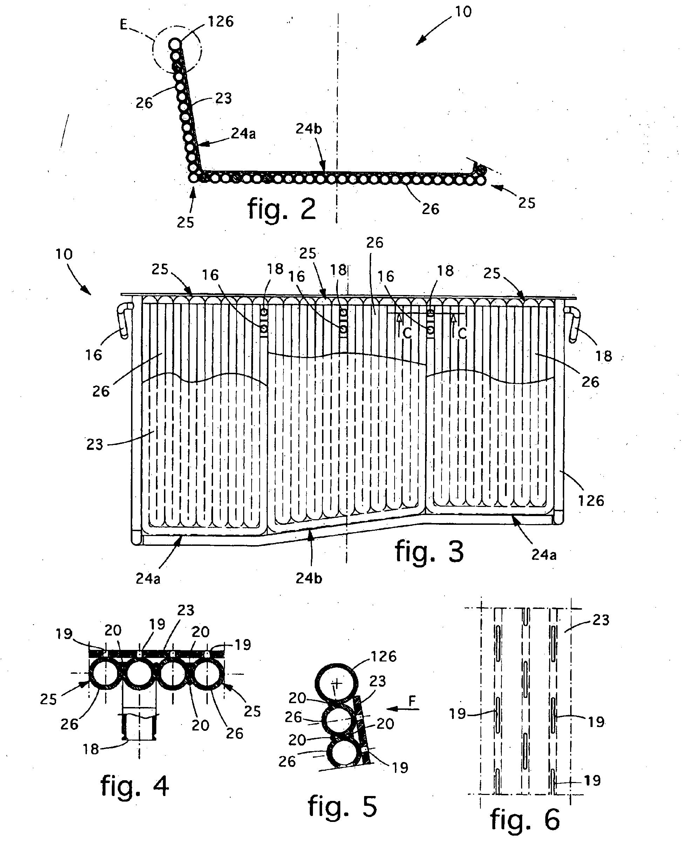

As can be seen in fig. 3, the terminal end, or front end, of the cradle structure has at least a segment, in this case the central segment, with a development not orthogonal to the longitudinal axis of the structure.

On the outside of the sheet 23 a plurality of cooling panels 25 are fixed, by means of welding, inside which cooling liquid circulates.

In this case, there are three cooling panels 25 so as to constitute respective independent circuits for the circulation of the liquid, one for each of the lateral walls 24a and one for the bottom wall 24b.

Each cooling panel 25 has a respective inlet end 16 and outlet end 18 for the cooling liquid. The configuration with independent panels 25 also reduces the times and difficulties connected to maintenance and/or repair of a possibly damaged panel.

Each panel 25 is made of a plurality of tubes 26 inside which the cooling liquid circulates, the tubes 26 of the same panel 25 being connected to each other so as to form a plurality of closely adjacent spirals, advantageously in contact with each other.

The tubes 26 of the panels 25 define a substantially continuous and uniform outer covering for the walls of the sheet 23, which on the one hand guarantees a high capacity of heat dissipation and on the other hand confers considerable mechanical rigidity to the whole structure.

The sheet 23 has a plurality of through eyelets 19, uniformly distributed on its surface, which are used to weld the cooling panels 25 to the sheet 23. To be more exact, the weld material used for welding advantageously fills the whole volume of the through eyelets 19 so that no localized thicker part is formed which would create points or areas of detachment between the tube 26 and the outer face of the sheet 23, considerably reducing the capacity of heat dissipation.

Welding points 20 can also be provided between tube and tube of the same panel 25, in order to confer greater rigidity to the overall structure and to prevent thermal heads which lower the cooling capacity of the panels 25.

A bent cooling tube 126 without welds is provided in correspondence with the lateral and front edges of the sheet 23, so as to define another cooling circuit independent from that of the panels 25 and also equipped with an inlet end 16 and an outlet end 18 for the cooling liquid.

Modifications and variants may be made to the connection conveyor 10 as described heretofore, which shall all come within the field of protection as defined by the attached claims.

## Claims

1. Connection conveyor used for loading a metal charge into a melting plant or furnace (11) of the type that uses a loading system with a main conveyor (15) and introduction of the charge from one side of the furnace (11), said connection conveyor (10) including a cradle structure having lateral (24a) and bottom (24b) walls, **characterized in that** said cradle structure is made from a metal sheet (23) having a U-shaped profile, outside said sheet (23) a plurality of cooling panels (25) being closely associated, disposed one adjacent to the other so as to form a substantially continuous covering, each of said cooling panels (25) being formed by at least a tube (26) inside which cooling liquid circulates.

2. Connection conveyor as in claim 1, **characterized in that** each cooling panel (25) is formed by a plurality of tubes (26) connected one to another so as to form a circuit for the circulation of the cooling liquid.

3. Connection conveyor as in claim 1 or 2, **characterized in that** said tubes (26) of the same panel (25) are connected together so as to form a plurality of substantially adjacent spirals, each panel (25) being suitable to be associated, at a first end, with means (16) to feed the cooling fluid, and at a second end with means (18) to discharge and re-circulate said cooling fluid.

4. Connection conveyor as in claim 2, **characterized in that** each of said tubes (26) is without welds.

5. Connection conveyor as in claim 1, **characterized in that** said sheet (23) includes a plurality of fissures or through eyelets (19) distributed on its surface and able to be used to make said cooling panels (25) solid with the outer surface of said sheet (23).

6. Connection conveyor as in claim 5, **characterized in that** the volume of said through eyelets or fissures (19) is completely filled with the weld material used for welding said cooling panels (25) to the outer surface of said sheet (23).

7. Connection conveyor as in any claim hereinbefore, **characterized in that** it includes at least a cooling tube (126) disposed in cooperation with the front and lateral edges of said sheet (23), said cooling tube (126) including an inlet end (16) and an outlet end (18) for the cooling liquid, so as to form an independent circuit for the circulation of the liquid.

8. Connection conveyor as in any claim hereinbefore, **characterized in that** the adjacent tubes (26) of the same cooling panel (25) are joined together by means of additional welding points (20).

9. Connection conveyor as in any claim hereinbefore, **characterized in that** the inner surface of said sheet (23) is smoothed.

10. Connection conveyor as in any claim hereinbefore, **characterized in that** the terminal end of said cradle structure includes at least a segment non-orthogonal to the longitudinal axis of the structure.

## Patentansprüche

1. Verbindungsförderer, verwendet zum Einbringen einer Metallcharge in eine Schmelzanlage oder einen Schmelzofen (11) des Typs, bei dem ein Beschickungssystem mit einem Hauptförderer (15) und mit Einführung der Charge von einer Seite des Ofens (11) verwendet wird, wobei der Verbindungsförderer (10) eine Wiegenkonstruktion mit Seiten- (24a) und Boden- (24b) Wänden umfasst, **dadurch gekennzeichnet, dass** die Wiegenkonstruktion aus einer Metalllage (23) mit U-förmigem Profil hergestellt ist, wobei außerhalb der Lage (23) eine Anzahl von Kühlplatten (25) eng verbunden sind, wobei sie einander benachbart so angeordnet sind, dass sie eine im Wesentlichen durchgehende Abdeckung bilden, wobei jede der Kühlplatten (25) durch mindestens ein Rohr (26) gebildet ist, innerhalb von dem eine Kühlflüssigkeit zirkuliert.

2. Verbindungsförderer nach Anspruch 1, **dadurch gekennzeichnet, dass** jede Kühlplatte (25) mittels einer Anzahl von Rohren (26) gebildet ist, die miteinander so verbunden sind, dass sie einen Kreislauf für die Zirkulierung der Kühlflüssigkeit bilden.

3. Verbindungsförderer nach Anspruch 1 oder 2, **dadurch gekennzeichnet, dass** die Rohre (26) derselben Platte (25) miteinander so verbunden sind, dass sie eine Anzahl von im Wesentlichen benachbarten Spiralen bilden, wobei jede Platte (25) an einem ersten Ende mit Mitteln (16) zum Zuführen der Kühlflüssigkeit und an einem zweiten Ende mit Mitteln (18) zum Abführen und Wiederzirkulieren der Kühlflüssigkeit verbindbar ist.

4. Verbindungsförderer nach Anspruch 2, **dadurch gekennzeichnet, dass** jedes der Rohre (26) ohne Verschweißungen ist.

5. Verbindungsförderer nach Anspruch 1, **dadurch gekennzeichnet, dass** die Lage (23) eine Anzahl von Spalten oder durchgehenden Ösen (19) umfasst, die über ihre Oberfläche verteilt sind und dazu verwendet werden können, die Kühlplatten (25) fest mit der Außenfläche der Lage (23) zu machen.

6. Verbindungsförderer nach Anspruch 5, **dadurch gekennzeichnet, dass** das Volumen der durchgehenden Ösen oder Spalte (19) vollständig mit dem Schweißmaterial gefüllt ist, das zum Verschweißen der Kühlplatten (25) mit der Außenfläche der Lage (23) verwendet wurde.

7. Verbindungsförderer nach einem beliebigen vorhergehenden Anspruch, **dadurch gekennzeichnet, dass** er wenigstens ein Kühlrohr (126) umfasst, das in Zusammenwirken mit den Vorder- und Seitenkanten der Lage (23) angeordnet ist, wobei das Kühlrohr (126) ein Einlassende (16) und ein Auslassende (18) für die Kühlflüssigkeit umfasst, um einen unabhängigen Kreislauf für die Zirkulierung der Flüssigkeit zu bilden.

8. Verbindungsförderer nach einem beliebigen vorhergehenden Anspruch, **dadurch gekennzeichnet, dass** die benachbarten Rohre (26) derselben Kühlplatte (25) mittels zusätzlicher Schweißpunkte (20) miteinander verbunden sind.

9. Verbindungsförderer nach einem beliebigen vorhergehenden Anspruch, **dadurch gekennzeichnet, dass** die Innenfläche der Lage (23) geglättet ist.

10. Verbindungsförderer nach einem beliebigen vorhergehenden Anspruch, **dadurch gekennzeichnet, dass** das Abschlussende der Wiegenkonstruktion wenigstens einen Abschnitt umfasst, der nicht senkrecht zur Längsachse der Konstruktion ist.

## Revendications

1. Transporteur de liaison utilisé pour charger une charge de métal dans une installation de fusion ou un four (11) du type qui utilise un système de chargement avec un transporteur principal (15) et l'introduction de la charge à partir d'un côté du four (11), ledit transporteur de liaison (10) comprenant une structure de berceau ayant des parois latérale (24a) et de fond (24b), **caractérisé en ce que** ladite structure de berceau est réalisée à partir d'une tôle métallique (23) ayant un profil en forme de U, à l'extérieur de ladite tôle (23), une pluralité de panneaux de refroidissement (25) étant intimement associés, disposés les uns de manière adjacente aux autres afin de former un recouvrement sensiblement continu, chacun desdits panneaux de refroidissement (25) étant formé par au moins un tube (26) à l'intérieur duquel circule du liquide de refroidissement.

2. Transporteur de liaison selon la revendication 1, **caractérisé en ce que** chaque panneau de refroidissement (25) est formé par une pluralité de tubes (26) raccordés les uns aux autres afin de former un circuit pour la circulation du liquide de refroidissement.

3. Transporteur de liaison selon la revendication 1 ou 2, **caractérisé en ce que** lesdits tubes (26) du même panneau (25) sont raccordés ensemble afin de former une pluralité de spirales sensiblement adjacentes, chaque panneau (25) étant approprié pour être associé, au niveau d'une première extrémité, à des moyens (16) pour alimenter le fluide de refroidissement et au niveau d'une seconde extrémité, à des moyens (18) pour décharger et faire recirculer ledit fluide de refroidissement.

4. Transporteur de liaison selon la revendication 2, **caractérisé en ce que** chacun desdits tubes (26) est dépourvu de soudures.

5. Transporteur de liaison selon la revendication 1, **caractérisé en ce que** ladite tôle (23) comprend une pluralité de fissures ou d'oeillets débouchants (19) répartis sur sa surface et pouvant être utilisés pour rendre lesdits panneaux de refroidissement (25) solidaires de la surface externe de ladite tôle (23).

6. Transporteur de liaison selon la revendication 5, **caractérisé en ce que** le volume desdits oeillets débouchants ou des fissures (19) est complètement rempli avec le matériau de brasage utilisé pour souder lesdits panneaux de refroidissement (25) à la surface externe de ladite tôle (23).

7. Transporteur de liaison selon l'une quelconque des revendications précédentes, **caractérisé en ce qu'**il comprend au moins une tube de refroidissement (126) disposé en coopération avec les bords avant et latéral de ladite tôle (23), ledit tube de refroidissement (126) comprenant une extrémité d'entrée (16) et une extrémité de sortie (18) pour le liquide de refroidissement, afin de former un circuit indépendant pour la circulation du liquide.

8. Transporteur de liaison selon l'une quelconque des revendications précédentes, **caractérisé en ce que** les tubes (26) adjacents du même panneau de refroidissement (25) sont assemblés au moyen de points de soudure (20) supplémentaires.

9. Transporteur de liaison selon l'une quelconque des revendications précédentes, **caractérisé en ce que** la surface interne de ladite tôle (23) est lissée.

10. Transporteur de liaison selon l'une quelconque des revendications précédentes, **caractérisé en ce que** l'extrémité terminale de ladite structure de berceau comprend au moins un segment non orthogonal à l'axe longitudinal de la structure.
